# EUROPEAN PATENT APPLICATION

(11) **EP 1 161 878 A1**
(43) Date of publication of application: **12.12.2001**
(21) Application number: 01202186.1
(22) Date of filing: 07.06.2001
(51) Int. Cl.: A23D 9/00, A23L 1/22

(54) **Shortenings with improved performance and doughs and baked products containing these**

(30) Priority: 07.06.2000 EP 00202026; 04.07.2000 EP 00202351
(71) Applicant: CSM Nederland B.V., 1000 AH Amsterdam (NL)
(72) Inventor: Fiammoi, Michelle, 26013 Crema (CR) (IT); Stronati, Raffaele, 26013 Crema (CR) (IT); Huscroft, Simon Christopher, CSM Bakery Europe, 28215 Bremen (DE)
(74) Representative: Jorritsma, Ruurd

(57) **Abstract**

The invention concerns in the first instance shortenings that can be applied in a bread dough for making a bread and that comprise more than 50 wt% of a vegetable fat and maximum 5 wt % of an encapsulated amphiphilic flavour while a number of other optional components can be present as well; these shortenings can be used in bread doughs (ready to bake / parbaked / frozen ) resulting in bread products with improved flavour performance.

## Description

So far in many countries the use of fat in bread dough and in bread was bound to strict regulations. E.g. in Italy the only fats that were allowed in bread products were olive oils or lard or butter, the last two were allowed in combination with olive oil as hard fat component that should give the fat and the product some body. Other fats were not allowed in these products. This automatically meant that the bread product could have an olive taste or a butter taste or a neutral fat taste.
Nowadays the authorities have changed their rules and allow also other vegetable fats in these bakery products. However this automatically led to a new problem that should be resolved as well. I.e. the use of these vegetable fats resulted in bread products that did not display the olive taste anymore. Attempts to provide the bread products, in particular the bread dough with an olive oil flavour failed due to the fact that the olive flavour incorporated in the dough did not survive the baking process of a moulded bread dough because of the high temperatures used during this baking process. Moreover it was found that the use of an olive oil per se resulted in doughs that were very sticky and thus difficult to handle and to work with.
A further disadvantage of the use of the flavour component per se is that the bread did not display a so called flavour burst, resulting from the fact that the flavour is not homogeneously distributed in the dough or bread product. Consumers however like these flavour bursts and thus did the bread not fulfil the demands from the consumer in a sufficient way.
Another problem related to the use of vegetable fats in particular derived from lauric fats and unsaturated fatty acids is that upon storage a distinct off-taste is developed. We found that this off taste can be masked very well by use of the shortenings which are part of our invention.

We studied whether we could find a solution for the above problems and we found that the above problems can be overcome when an encapsulated flavour is applied, which encapsulated flavour is incorporated in a fat system to make a shortening, which shortening can be used in the preparation of the dough and the baked bread product obtained therefrom after baking of a moulded dough. The bread so obtained had an excellent taste, i.e. when using an encapsulated olive oil flavour the bread had an excellent olive oil taste, but other flavours in encapsulated form could be used as well. In fact the encapsulated flavours that can be used in our invention are the encapsulated amphiphilic flavours as disclosed in US 6 045 835. The term "amphiphilic flavours" as used throughout this document encompasses flavours which are both partially water-soluble and partially lipid-soluble, i.e. display dual solubility properties. The encapsulated amphiphilic flavours according to the invention are obtained in the form of microcapsules having a hydrogel shell and an oil core.

US 3,867,556 (Procter & Gamble) relates to a double-encapsulated flavour particle comprising: (a) a volatile flavour material, (b) a heat-release, water insoluble material having a melting point of from about 120°F or higher encapsulating said volatile flavour material, and (c) an oil-insoluble, water-soluble material encapsulating said heat-release, water-insoluble material. The heat-release water-insoluble material can be a hardstock fat and the'water soluble encapsulating material a gum. The application of the double encapsulated flavour particles in shortening is also described in the patent. The methods disclosed, however, are only suitable for encapsulating lipophylic flavours.

The encapsulated flavours employed in accordance with the present invention can be made by the process disclosed in the aforementioned US patent 6 045 835 (which is incorporated here as a whole by way of reference). The encapsulation process involves in fact the following steps:(i) a microcapsule is prepared having a hydrogel shell surrounding an oil core for retention of the oil in the shell
(ii) an amphiphilic flavour is added in the presence of water to the microcapsule for transport into the retained oil core
(iii) this compound is transported through the hydrogel core by aqueous diffusion
(iv) and the oil core is retained in the hydrogel shell during transportation to provide the encapsulated flavour.
Subsequent dehydration of the microcapsule or crosslinking of the capsule effectively locks the flavour inside the microcapsule. US 6 045 835 nowhere hints at the possibility of using of the encapsulated flavours described therein for flavouring shortenings.

Therefore our invention concerns in the first instance a shortening comprising fat and/or other food ingredients wherein the fat is a vegetable fat or derived from a vegetable fat and is present in an amount of more than 50 wt %, preferably more than 98 wt %, while an encapsulated amphiphilic flavour is present in amounts of maximum 5 wt %, preferably less than 0.5 wt % and optionally 0 to 50 wt % of one or more of the following components, selected from the group consisting of emulsifiers, bread improving enzymes, thickeners, in particular healthy thickeners such as inulin, lactic acid bacteria, yeasts fresh or in dry form, acetic bacteria, baking powder, sour dough, nutritional fatty acid components, which are preferably highly unsaturated fatty acids in the form of a glyceride, minerals, vitamins, anti-oxidants, in particular vitamin C and/or E, malt extract, sugars and flour are present.

Although the size of the encapsulated flavours can vary between a broad range we found that the best edible products were obtained when these encapsulated flavours have a maximum particle size of 2 mm, preferably maximum 0.3 mm.

The amphiphilic flavour can be chosen from a wide range of flavours. The only requirement that must be fulfilled by these flavours is that they meet the criteria for amphiphilicity as mentioned in col. 4,1.25 to 29 of US' 835, i.e. the flavour must be both partially water soluble and partially lipid soluble. Flavours that meet the above criteria and that can be applied successfully in the products of our invention are olive oil flavour, or an extra virgin olive oil flavour, or a butter flavour, or a bread flavour or a fruit flavour or a sour dough flavour or a yeast flavour. Best results are obtained with olive oil flavour, extra virgin olive oil flavour, butter flavour and bread flavour.

In a preferred embodiment of the invention the encapsulated amphiphilic flavour is obtained by a coacervation process. In such a coacervation process there is a separation into a colloid-rich phase (the coacervate) and an aqueous solution of the coacervating agent (the equilibrium agent), forming an oil coated with protein, carbohydrate, or polymeric droplets. In the process, two lipid phases, and one aqueous phase are ultimately absorbed into one lipid phase and one aqueous phase. The first lipid phase forms the microcapsule core. The core is surrounded by a hydrogel capsule, defined herein as a colloid in which the dispersed phase (colloid) has combined with the continuous phase (water) to produce a viscous jelly-like product. The second lipid phase is obtained following dispersing of the amphiphilic flavour into the water.

The hydrogel shell of the microcapsules comprised by the encapsulated flavour preferably consists essentially of a material selected from the group consisting of a protein (e.g. gelatin), a carbohydrate (e.g. gum arabic, alginate or carboxymethyl cellulose), a synthetic polymer (e.g. polyvinyl pyrollidone) and mixtures thereof.

The vegetable fat that can be applied preferably displays a solid fat index measured by NMR -pulse on a non-stabilised fat at the temperature indicated of N10 = 20-60; N20 = 12 - 40; N30 = 5 - 15 and N35 < 10. By non-stabilised is meant that the N-value is measured after subjecting the fat to the following temperature regime: melt at 80 °C, cool to 0 °C and keep it thereon for 30 min; warm up to measurement temperature and keep it thereon for 30 min and measure the N-value by NMR -pulse technology.

Very suitable fats that can be used in our shortenings are fats wherein the fat is a blend of a liquid oil (A) with a melting point below 10 °C , a lauric based fat (B), a tropical fat with mainly fatty acids with 16 - 18 °C atoms (C) and a hardstock fat (D) in a ratio A:B:C:D = (10-40): (5- 25): (25-45) : (20 : 50).
Typical examples of the components A, B, C and D are:
liquid oils (A) selected from the group consisting of sunflower oil, high oleic sunflower oil, corn oil, rice oil, soybean oil, rapeseed oil, cotton oil, olive oil, extravirgin olive oil, virgin olive oil, grapeseed oil, palm olein, peanut oil.
Lauric based oils (B) selected from the group consisting of coconut oil, palmkernel oil, fractions and mixtures thereof.
Tropical fats (C) selected from the group consisting of cocoa butter, cocoa butter equivalents, palm oil, shea oil, illipe or fractions thereof.
Hardstocks (D) selected from the group consisting of palm oil stearin; hardened palm oil; interesterified mixtures of hardened palm oil stearin and hardened palm kernel oil, hardened sunflower oil, hardened soyabean oil, hardened rapeseed oil, hardened cotton seed oil, hardened coconut oil, hardened grapeseed oil, hardened peanut oil, palm fractions, palmkernel fractions, coconut fractions.

A very convenient shortening, which has very benificial handling and dosing properties comprises a free flowing shortening comprising the shortening according to the invention and 10 to 50 wt % of a flour and wherein the flour is applied as carrier for the fat particles and the average particle size of the free flowing shortening is 200 to 500 micron.

The shortenings according to the invention can be made by a process comprising the following steps:
(i) a fat is molten at a temperature of at least 55 °C
(ii) encapsulated amphiphlic flavour is added to the molten fat in amounts corresponding with the composition according to the invention, whereupon the mixture is heated to more than 60 °C
(iii) the other ingredients, other than the enzymes according to the invention are added in amounts corresponding with the amounts mentioned in claim 1
(iv) optionally the mixture is cooled to a temperature below 50 °C and the enzymes are added
(v) the mix so obtained with a temperature of about 30 to 60 °C is transferred to a votator system (A-Units) and worked herein under shear to a product with an exit temperature of 5 to 30 °C
(vi) the product so obtained is crystallised in a C-Unit under a shear of 100 to 500 rpm until an exit temperature of 5 to 35 °C is achieved

According to another embodiment of our invention the shortenings can be applied for the making of a dough. Therefore the doughs resulting therefrom are also part of our invention. Therefore the invention also concerns.
A dough composition for a bread or bread substitute products comprising:
(i) flour and
(ii) on flour 0.1 to 50 wt % of the shortening according to claims 1-10
(iii) on flour 20 to 120 wt % water
(iv) on flour 0.1 to 10 wt % leavener, preferably a yeast
(v) on flour 0.01 to 4 wt % of cereal malted flour or dough conditioner or generic bread improver
(vi) on flour 0 to 3.5 wt % of salt
wherein the ingredients (i)-(vi) are mixed and kneaded at ambient temperature during 2-30 minutes which dough is fermented and moulded, whereupon the moulded and fermented dough has a SV that is at least 10 % more than the dough without fermentation.

The dough obtained can be handled in different ways. This handling can result in a dough that is a ready to bake frozen dough or a parbaked frozen dough or a parbaked dough in a controlled atmosphere, or a frozen dough.

The baked products resulting from the baking of a moulded dough according to the invention are also part of our invention. These baked products are characterised by the fact that they display a remarkable flavour burst upon chewing.

According to other embodiments of our new invention the invention also concerns the use of our new products to achieve unexpected effects. Thus our invention also concerns:
1) The use of a shortening with the composition according to claims 1- 9 to improve the dough workability, in particular the firmness after kneading, stickiness, handling and fermentation tolerance of the dough made therewith compared to a dough based on a liquid oil or on a lower melting fat.
2) The use of an encapsulated amphiphilic flavour in a shortening to mask the off-taste of unsaturated fatty acids and of the short chain and medium chain fatty acids present in the fat of the shortening when applied in a dough.
3) And the use of an encapsulated amphiphilic flavour composition in a dough to achieve a baked product that after baking displays an inhomogeneous flavour distribution while upon chewing of the baked dough product a flavour burst is perceived.

### Example

A dough was made from the components as mentioned in the table below using the conditions indicated.
In the table the dough preparation according to the invention containing the shortening and the amphiphilic encapsulated flavour is disclosed while the comparative doughs were prepared with a liquid oil and a lard fat.

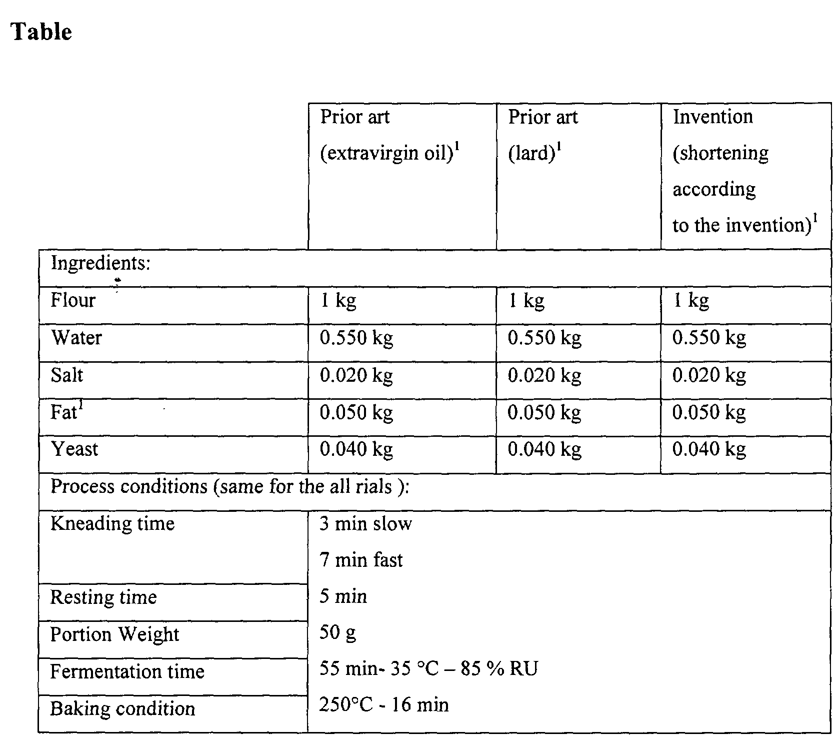

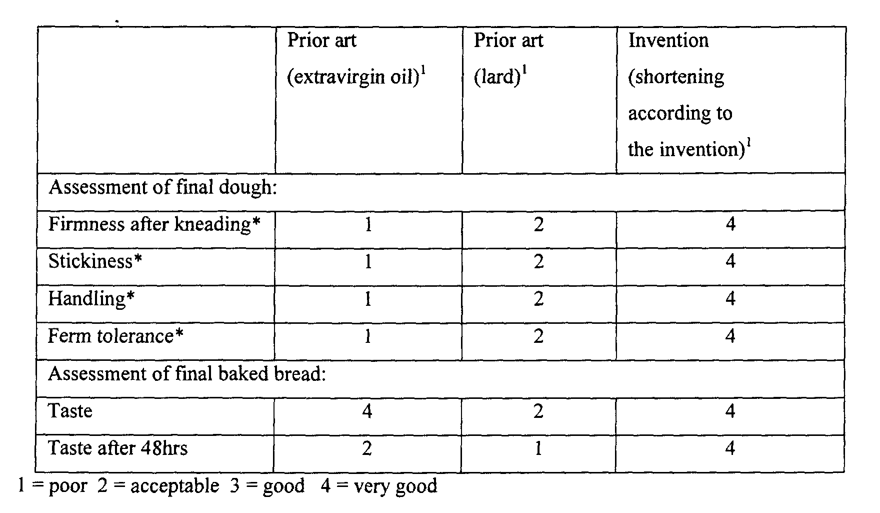

So it can be concluded that the dough prepared according to the invention increases the consistency and the workability of the dough. This can be attributed to the fact that the stickiness and softness of the dough were decreased.
In the final baked product using an encapsulated extravirgin olive oil a persistent taste is provided, due to the use of the encapsulated particular components according to the invention.

## Claims

1. Shortening comprising fat and/or other food ingredients wherein the fat is a vegetable fat or derived from a vegetable fat and is present in an amount of more than 50 wt %, preferably more than 98 wt %, while an encapsulated amphiphilic flavour is present in amounts of maximum 5 wt %, preferably less than 0.5 wt % and optionally 0 to 50 wt % of one or more of the following components, selected from the group consisting of emulsifiers, bread improving enzymes, thickeners, in particular healthy thickeners such as inulin, lactic acid bacteria, yeasts fresh or in dry form, acetic bacteria, baking powder, sour dough, nutritional fatty acid components, which are preferably highly unsaturated fatty acids in the form of a glyceride, minerals, vitamins, anti-oxidants, in particular vitamin C and/or E, malt extract, sugars and flour are present.

2. Shortening, according to claim 1 wherein the encapsulated flavours have a maximum particle size of 2 mm, preferably maximum 0.3 mm.

3. Shortening, according to claim 1 or 2 wherein the amphiphilic flavour is an olive oil flavour, or an extra virgin olive oil flavour, or a butter flavour, or a bread flavour.

4. Shortening according to claims 1 to 3 wherein the vegetable fat has a solid fat index measured by NMR -pulse on a non-stabilised fat at the temperature indicated of N10 = 20-60 ; N20 = 12 - 40 ; N30 = 5 - 15 and N35 < 10.

5. Shortening according to claims 1 to 5, wherein the encapsulated amphiphilic flavour comprises microcapsules having a hydrogel shell and an oil core.

6. Process for making a shortening with the composition according to claims 1-5 wherein
(i) A fat is molten at a temperature of at least 55 °C
(ii) Encapsulated amphiphlic flavour is added to the molten fat in amounts corresponding with the composition according to claim 1, whereupon the mixture is heated to more than 60 °C
(iii) the other ingredients, other than the enzymes according to claim 1 are added in amounts corresponding with the amounts mentioned in claim 1
(iv) optionally the mixture is cooled to a temperature below 50 °C and the enzymes are added
(v) the mix so obtained with a temperature of about 30 to 60 °C is transferred to a votator system (A-Units) and worked herein under shear to a product with an exit temperature of 5 to 30 °C
(vi) the product so obtained is crystallised in a C-Unit under a shear of 100 to 500 rpm until an exit temperature of 5 to 35 °C is achieved

7. Dough composition for a bread or bread substitute product comprising:
(i) flour and
(ii) on flour 0.1 to 50 wt % of the shortening according to claims 1-5
(iii) on flour 20 to 120 wt % water
(iv) on flour 0.1 to 10 wt % leavener, preferably a yeast
(v) on flour 0.01 to 4 wt % of cereal malted flour or dough conditioner or generic bread improver
(vi) on flour 0 to 3.5 wt % of salt
wherein the ingredients (i)-(vi) are mixed and kneaded at ambient temperature during 2- 30 minutes
which dough is fermented and moulded, whereupon the moulded and fermented dough has a SV that is at least 10 % more than the dough without fermentation.

8. Dough according to claim 7 wherein the dough is a ready to bake frozen dough or a parbaked frozen dough or parbaked dough in controlled atmosphere, or frozen dough

9. Baked moulded bakery product prepared from a moulded dough according to claim 7 or 8.

10. Use of an encapsulated amphiphilic flavour in a shortening to mask the off-taste of the short chain and medium chain fatty acids present in the fat of the shortening when applied in a dough.
